# EUROPEAN PATENT SPECIFICATION

(11) **EP 3 321 487 B1**
(45) Date of publication and mention of the grant of the patent: **26.06.2019**
(21) Application number: 17201200.7
(22) Date of filing: 10.11.2017
(51) Int. Cl.: F02B 37/18, F02B 37/24, F16H 1/00, H02K 7/116, H02K 7/12

(54) **ROTARY ELECTROMECHANICAL ACTUATOR FOR POWERTRAIN APPLICATIONS, IN PARTICULAR FOR A TURBOCHARGER ADJUSTING SYSTEM**
ROTIERENDER ELEKTROMECHANISCHER STELLANTRIEB FÜR ANTRIEBSSTRANGANWENDUNGEN, INSBESONDERE FÜR EIN TURBOLADER-EINSTELLSYSTEM
ACTIONNEUR ÉLECTROMÉCANIQUE ROTATIF POUR DES APPLICATIONS DE GROUPE MOTOPROPULSEUR, EN PARTICULIER POUR UN SYSTÈME D'AJUSTEMENT DE TURBOCOMPRESSEUR

(30) Priority: 10.11.2016 IT 201600113589
(43) Date of publication of application: 16.05.2018
(73) Proprietor: Magneti Marelli S.p.A., 20011 Corbetta (MI) (IT)
(72) Inventor: PEZZOTTA, Federico, 86036 Montenero di Bisaccia (IT); MUSOLESI, Stefano, 40122 Bologna (IT); AVANZI, Matteo, 40014 Crevalcore (IT); PICIOTTI, Roberto, 40139 Bologna (IT)
(74) Representative: Musconi, Roberta

(56) References cited:
- WO-A1-2015/169460
- DE-A1-102005 028 374
- JP-A- 2003 343 701
- US-A1- 2005 184 265
- US-A1- 2009 078 898
- US-A1- 2013 047 941
- US-A1- 2013 049 502

## Description

### TECHNICAL FIELD

The present invention relates to an electromechanical actuator to operate a using device of an internal combustion engine. The present invention finds advantageous but not exclusive application in adjusting a turbocharger.

### PRIOR ART

For example, JP 2003 343701 A discloses such an electromechanical actuator.

As already known, an internal combustion engine supercharged by a turbocharger supercharging system includes a number of cylinders, each of which is connected to an intake manifold and an exhaust manifold. The intake manifold receives a gas mixture that includes both exhaust gas and fresh air, i.e. air coming from the outside, through an intake duct regulated by a butterfly valve. An exhaust duct is then connected to the exhaust manifold, said duct supplying the exhaust gas to an exhaust system, which releases the combustion gas into the atmosphere and normally comprises at least one catalyst (optionally provided with an anti-particulate filter) and at least one silencer arranged downstream of the catalyst.

The internal combustion engine overcharging system comprises a turbocharger with a turbine, that is arranged along the exhaust duct to rotate at high speed under the thrust of the exhaust gas ejected by the cylinders, and a compressor, which is arranged along the intake duct and is mechanically connected to the turbine to be rotated by the turbine to increase the air pressure in the intake duct. The internal combustion engine further includes a highpressure exhaust gas recirculation circuit and a low-pressure exhaust gas recirculation circuit along which EGR valves are arranged to adjust the exhaust gas flow rate. Moreover, a plurality of motion mechanisms are provided for moving the devices, such as the EGR valves adjusting the exhaust gas flow rate and/or the turbocharger vanes (in case of a variable-geometry turbocharger).

Both the butterfly valve and the above devices, such as the EGR valves, are controlled by electromechanical steering actuators between an opening position and a closing position, and vice versa. Electromechanical actuators typically comprise a housing holding an electric motor and a gear transmission, which transmits motion from the electric motor to an interface for operating the devices, such as e.g. the butterfly valve. Usually the actuator housing is made of aluminium and/or plastic material.

To meet increasingly tighter requirements in terms of size reduction (especially in the axial direction) and weight and cost containment, the present trend is reducing the thickness of the used components or using low-density materials; however, the containment bodies of the electromechanical actuators are thus often affected by distortions due to mechanical and thermal stresses.

### DESCRIPTION OF THE INVENTION

The object of the present invention is therefore to provide an electromechanical actuator to operate a using device of an internal combustion engine, in particular for a turbocharger, which is free from the drawbacks of the prior art and can be easily and inexpensively manufactured. According to the present invention, it is provided an electromechanical actuator to operate a using device of an internal combustion engine, in particular for a turbocharger, as claimed in the appended claims.

### SHORT DESCRIPTION OF THE DRAWINGS

The present invention will now be described with reference to the accompanying drawings illustrating an example of a non-limiting embodiment, wherein:
- figure 1 is a schematic view of a supercharged internal combustion engine;
- figure 2 is a perspective and partially sectional view of an electromechanical actuator to operate a device in the internal combustion engine of figure 1 made in accordance with the present invention;
- figure 3 is an exploded view of the electromechanical actuator of figure 2;

- figure 4 shows in sequence the assembly procedure of some of the actuator components of figure 2; and
- figures 5 and 6 show an enlarged view of the actuator of figure 2 in two different operating configurations.

### PREFERRED EMBODIMENTS OF THE INVENTION

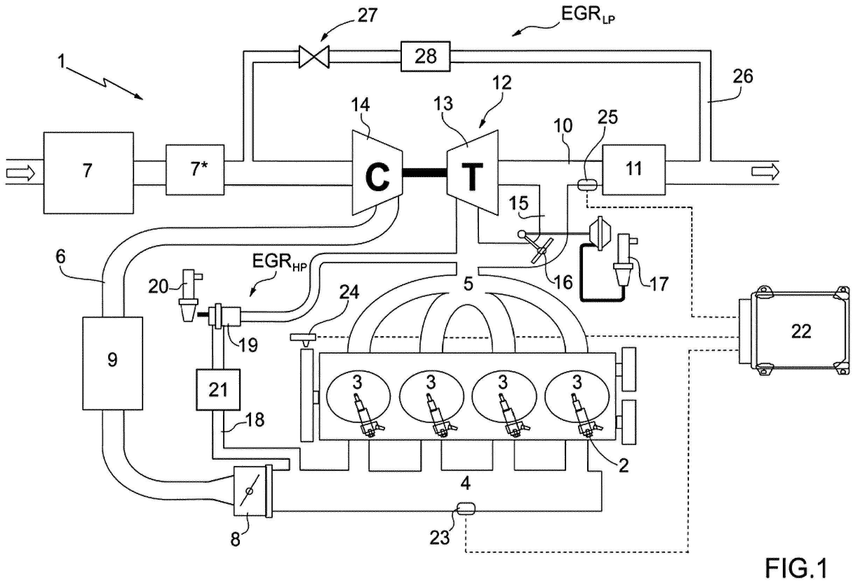

Figure 1 indicates with the reference number 1 an overall internal combustion engine supercharged by means of a turbocharger supercharging system 2.

The following description will make explicit reference, without however losing its generality, to the case when the internal combustion engine 1 is supercharged. The electromechanical actuator to operate a using device is obviously applicable to an internal combustion engine 1 with different structure and system.

The internal combustion engine 1 comprises a number of cylinders 3 (in particular, figure 1 shows four cylinders 3), each of which is connected to an intake manifold 4 by means of at least one respective intake valve (not shown) and to an exhaust manifold 5 by means of at least one respective exhaust valve (not shown). Said intake manifold 4 receives fresh air (i.e., air coming from the outside) through an intake duct 6, which is provided with an air filter 7 and is regulated by a butterfly valve 8. According to a preferred variant, a flow meter 7* is provided along the intake duct 6, downstream of the air filter 7. Moreover, along the intake duct 6 it is provided an intercooler 9 for cooling the sucked air. The exhaust manifold 5 is connected to an exhaust duct 10 that supplies the exhaust combustion gas to an exhaust system, which releases the combustion gas into the atmosphere and normally comprises at least one catalyst 11 and at least one silencer (not shown) arranged downstream of the catalyst 11.

The supercharging system 2 of the internal combustion engine 1 comprises a turbocharger 12 provided with a turbine 13, arranged along the exhaust duct 10 to rotate at high speed under the thrust of the exhaust gas ejected by the cylinders 3, and a compressor 14, which is arranged along the intake duct 6 and is mechanically connected to the turbine 13 to be rotated by the turbine 13 to increase the air pressure supplied to the intake duct 6.

Along the exhaust duct 10 it is provided a bypass duct 15, which is connected in parallel with the turbine 13 so as to have its ends upstream and downstream of the turbine 13. Along the bypass duct 15 it is provided a wastegate valve 16, which regulates the flow of exhaust gas flowing through the bypass duct 15 and is controlled by an actuator 17.

The internal combustion engine 1 further comprises a highpressure EGR_{HP} circuit, which in turn comprises an intake duct 18 connected in parallel with the assembly formed by the cylinders 3, the intake manifold 4 and the exhaust manifold 5. A P_{off} valve 19, provided along the bypass duct 18, regulates the flow of exhaust gas flowing through the bypass duct 18 and is operated by an EGR solenoid valve 20. A heat exchanger 21 for cooling the gas leaving the exhaust manifold 5 is provided along the bypass duct 18, downstream of the P_{off} valve 19.

The internal combustion engine 1 is controlled by an electronic control unit 22, which controls the operation of all internal combustion engine components 1. The electronic control unit 22 is connected to a sensor 23 measuring the temperature and the pressure of the gas mixture in the intake manifold 4, to a sensor 24 measuring the rotation speed of the internal combustion engine 1 and to a sensor 25 (typically a UHEGO or UEGO linear oxygen sensor-already known and therefore not described in detail) measuring the air/fuel ratio of the exhaust gas upstream of the catalyst 11.

The internal combustion engine 1 finally comprises a low-pressure EGR_{LP} circuit, which in turn comprises a bypass duct 26 along the exhaust duct 10; the bypass duct 26 is connected in parallel to the turbocharger 12. An EGR valve 27, which regulates the flow of exhaust gas flowing through the bypass duct 26, is provided along the bypass duct 26. A heat exchanger 28 for cooling the gas leaving the exhaust manifold 5 and flowing into the compressor 14 is arranged along the bypass duct 26, upstream of the valve 27, too. The low-pressure EGR_{LP} circuit comprises a three-way mixing device (not shown) arranged at the intersection between the exhaust duct 10 and the intake duct 6 and adjusting the mixing of the exhaust gas from the exhaust duct 10 with the fresh air in the intake duct 6.

The low-pressure EGR_{LP} circuit originates from the exhaust duct 10 downstream of the catalyst 11 so as to take in the exhaust gas that has already been treated by the catalyst 11 and whose pressure is only slightly above the atmospheric pressure. In this way, the exhaust gas recirculated by the bypass duct 26 is "cleaner", namely has a smaller amount of pollutants. This configuration is also called "Long-Route" EGR, as the bypass duct 26 must be longer than it would otherwise be to get downstream of the catalyst 11.

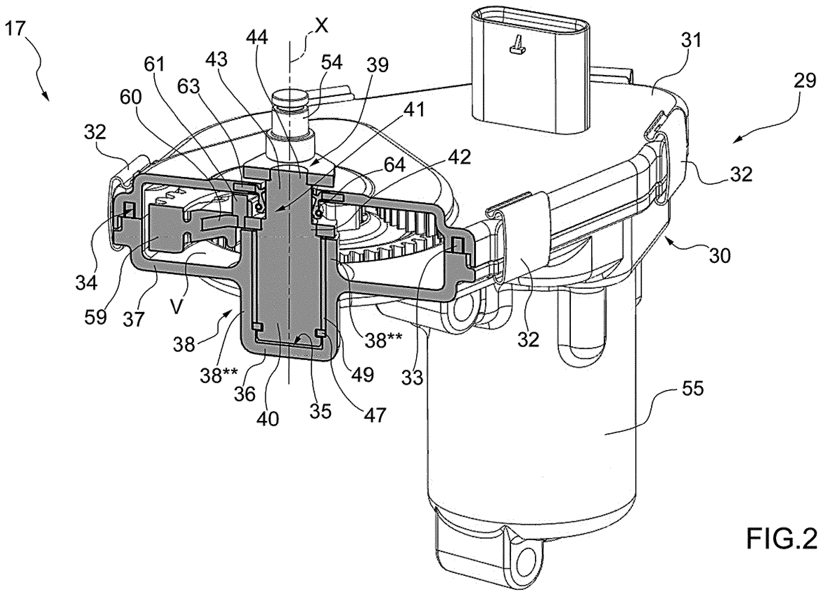

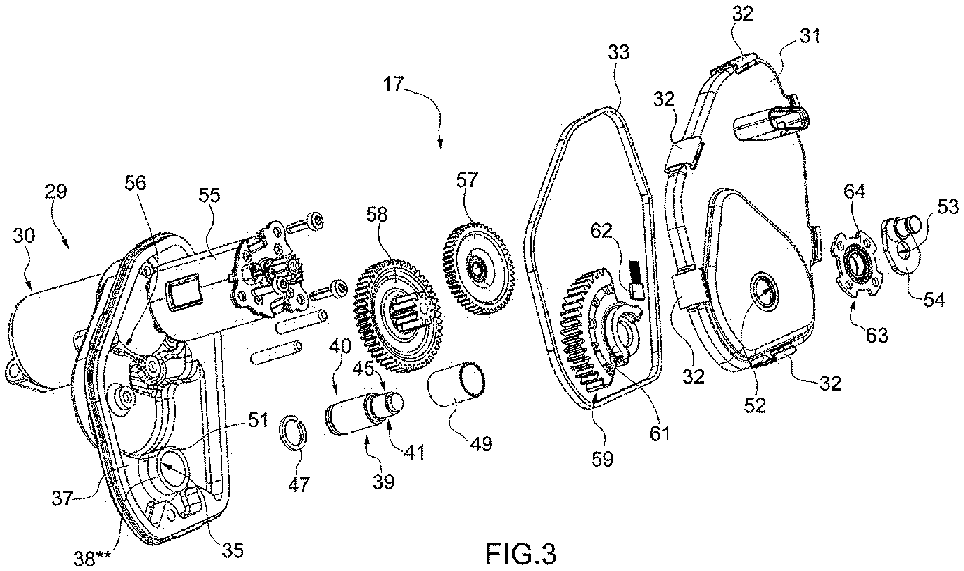

Figures 2 to 6 show in detail the electromechanical actuator 17 designed to control a using device, such as the wastegate valve 16, of the internal combustion engine 1. Alternatively, the electromechanical actuator 17 may be designed to control any of the following using devices of the internal combustion engine 1: the butterfly valve 8, the EGR solenoid valve 19 controlling the P_{off} valve 19, which regulates the gas flow rate through the bypass duct 18, the solenoid valve controlling the EGR valve 27 to regulate the exhaust flow rate through the bypass duct 26, the solenoid valve controlling the three-way mixing device arranged at the intersection between the exhaust duct 10 and the aspiration duct 6, the devices constituting the equipment of the turbocharger 12 (such as vanes and/or valves), the water/oil valves, the swirl/tumble valves and the aerodynamic valves and vanes.

As shown in figures 2 to 6, the electromechanical actuator 17 comprises a housing 29 made of a lower element 30 and by a lid 31, which are suitably connected by means of a plurality of closing clips 32 arranged on the periphery of the housing 29, and internally define a compartment V. The seal between the lower element 30 and the lid 31 is guaranteed by an annular gasket 33 housed in a groove 34 formed in the lid 31.

A seat 35 is provided in the compartment V, said seat being provided with a symmetry axis X that is closed at the bottom and cup-shaped. The seat 35 is defined by a bottom wall 36 projecting from a base wall 37 of the lower element 30 out of the housing 29 and by a cylindrical side wall 38 consisting of a section 38* joining it to the base wall 37 and of a section 38** projecting into the compartment V. The seat 35 is designed to house a portion of a shaft 39, also coaxial to the symmetry axis X. The shaft 39 has an uneven width.

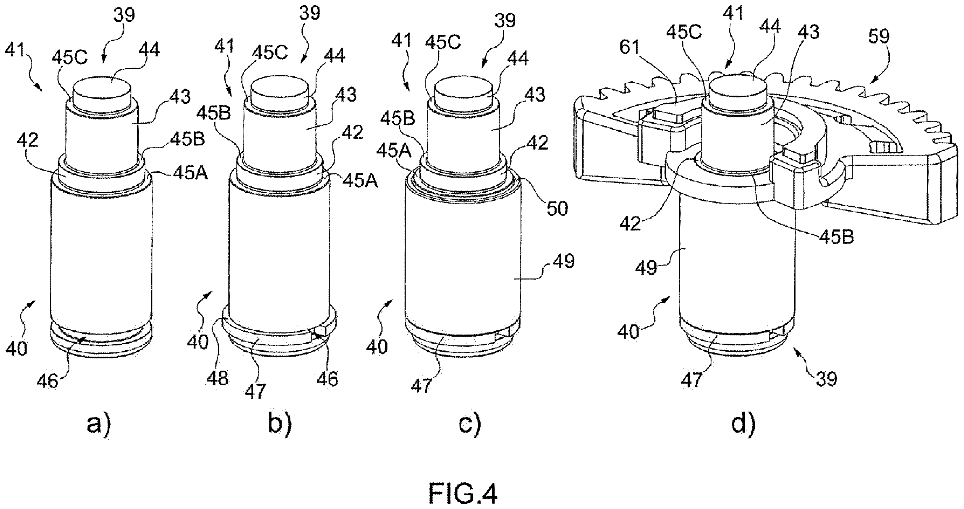

As shown in FIG. 4, the shaft 39 comprises a lower portion 40 and an upper portion 41 having an uneven diameter; in particular, the upper portion 41 is divided into a segment 42 joining it to the lower portion 40, having a reduced thickness and a smaller diameter than the lower portion 40, a central segment 43 having a diameter smaller than the segment 42 and an upper segment 44, which in turn has a diameter smaller than the central segment 43. Three shoulders 45 are thus formed at three section variation points along the symmetry axis X of the upper portion 41. A first shoulder 45A is formed between the lower portion 40 and the joining segment 42, a second shoulder 45B is formed between the joining segment 42 and the central segment 43 and a last shoulder 45C is formed between the central segment 43 and the upper segment 44.

As best shown in FIGS. 2, 4a and 4b, the lower portion 40 is provided with an annular peripheral groove 46 formed near a lower end of the lower portion 40 and designed to house an annular sealing gasket 47, which, in use, engages the groove 46 and projects outwardly of the shaft 39.

As best shown in FIGS. 2 and 4C, an upper surface 48 of the annular sealing gasket 47 defines a support plane for a tubular bushing 49, coaxial to the symmetry axis X. The bushing 49 is sized so that it extends from the upper surface of the annular sealing gasket throughout the length of the lower portion 40. In use, an upper surface 50 of the bushing 49 is substantially coplanar with the shoulder 45A and with the upper surface 51 of the side wall 38, so as to define a striker for a toothed element, as best described in the following.

The shaft 39 can be made by using different integrated materials, can be assembled or made in one piece.

The lower portion 40 is completely arranged within the seat 35, while the upper segment 44 extends through a through aperture 52 coaxial to the symmetry axis X formed in the lid 31 and engages a through hole 53 formed in an interface lever 54 operating the using device of the internal combustion engine 1. Alternatively, the using device of the internal combustion engine 1 can be operated by any geometry directly obtained on the shaft 39, particularly at the upper segment 44.

If the using device of the internal combustion engine 1 is operated via the interface lever 54, it is operated by the upper portion 41 of the shaft 39 with which it is integral. The connection between the interface lever 54 and the upper portion 41 can be achieved by any type of connection, such as e.g. by welding (in particular by laser welding).

If the using device of the internal combustion engine 1 is directly operated through the geometry of the shaft 39, it occurs a coaxial torque grip; in other words, the using device is directly operated by the shaft 39, in particular by the upper portion 40, with no interface lever 46.

The electromechanical actuator 17 is operated by an electric motor 55, which is housed in a special seat 56 formed in the lower element 30 extending out of the housing 29.

Motion is transmitted from the electric motor 55 to the shaft 39 through a suitable transmission. The transmission can be alternatively obtained by means of different solutions, which include, for example, the use of belts, etc. In the preferred embodiment, the motion transmission is carried out by means of gears. In particular, the gear transmission includes a toothed drive element 57, which is preferably made as a classic double-toothed gear, which receives the motion from the electric motor 55 and engages with a toothed element 58, which is also preferably made as a classic double-toothed gear. The toothed element 58 receives the motion from the toothed drive element 57 and transmits it to a further toothed element 59 cooperating with the shaft 39 to which the motion is transmitted.

As best shown in FIGS. 2 and 4(d), the toothed element 39 is coaxial to the symmetry axis X and is fitted onto the upper portion 41, particularly on the joining segment 42.

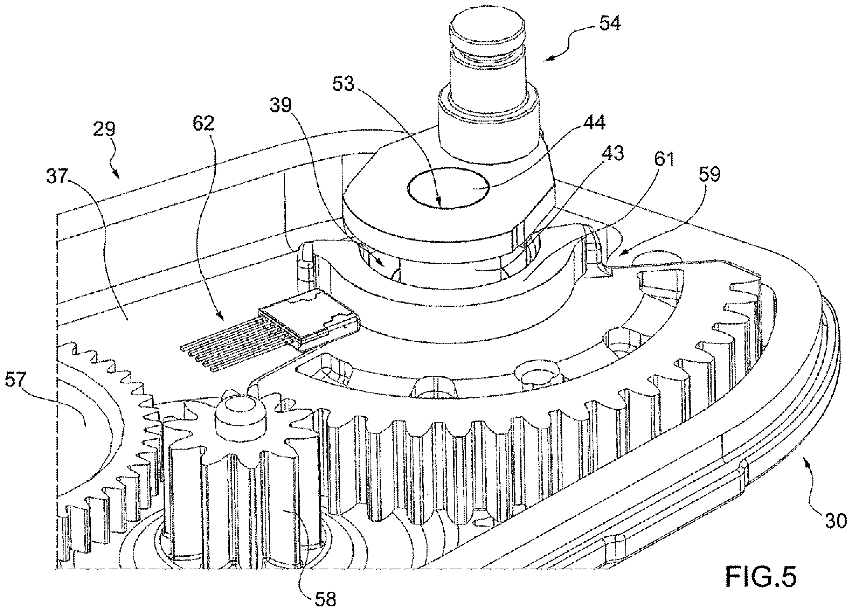

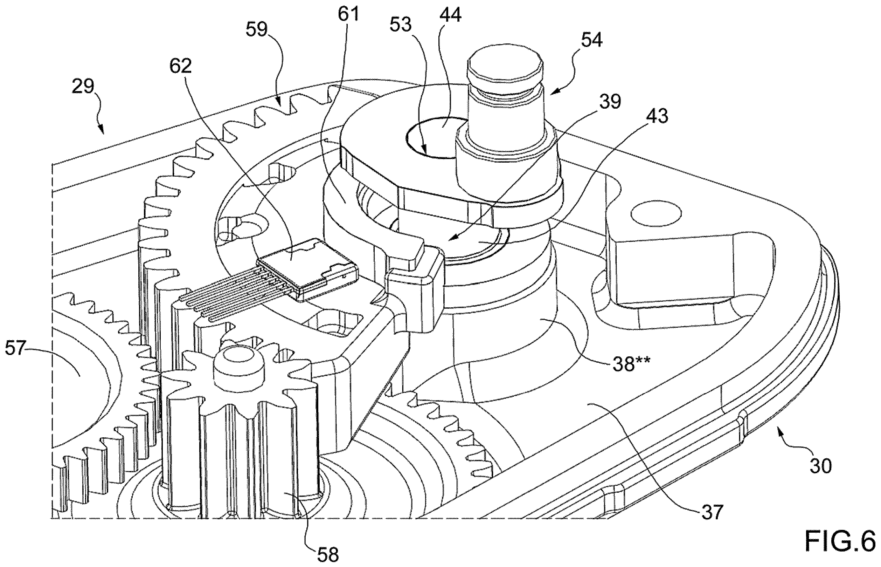

The toothed element 59 is preferably made as a toothed section. The toothed element 59 is made of plastic, co-moulded on a metal insert 60. The toothed element 59 further comprises a magnet 61, manufactured as a top half-toroidal appendage made of a magnetic material protruding toward the lid 31. In use, the toothed element 59 is movable between two extreme limit-stop positions shown respectively in FIGS. 5 and 6. According to a preferred variant, the magnet 61 is made of plastic neodymium.

At the coupling section with the toothed element 59, the outer surface of the joining segment 42 has a profile complementary to the profile of the inner surface of the toothed member 59, so that they join by their matching shapes.

To prevent any tribological problem (such as friction and wear), friction-reducing coatings and/or suitable surface treatments may be provided.

In order to obtain a good compromise between mechanical strength, thermal resistance, weight and cost, in the preferred embodiment the lower element 30 is made of a metal, preferably aluminium, the lid 31 is made of plastic material and the shaft 39 is made of metal, preferably steel.

The electromechanical actuator 17 is further provided with a sensor 62 arranged in a position facing and near the toothed element 5 to detect the rotational movement of the toothed member about the symmetry axis X. According to a first variant, the sensor is integral with an inner surface of the lid 31. According to a further variant, the sensor 62 is integral with the lower element 30.

The sensor 62 is fixed in a position directly facing the magnet 61. The sensor 62 is designed to detect the movement of the magnet 61 about the symmetry axis X. Moreover, the sensor 62 is arranged so as to detect the presence of the magnet 61 at the limit-stop position shown in FIG. 5 and at the limit-stop position shown in FIG. 6.

The particular arrangement of the sensor 62 facing the magnet 61 allows obtaining only a radial reading of the position of the magnet 61 and, consequently, a reduced tolerance chain, because the reading of the sensor 62 is not affected by axial play. Moreover, it is possible to intervene on the electromagnetic specifications of the sensor 62 by varying the geometry of the magnet 61 or by modifying the existing space between the sensor 62 and the magnet 61.

According to the invention, the seal between the shaft 39 and the lid 31 is ensured by an annular reinforcement gasket 63 co-moulded in the lid 31, which is coaxial to the symmetry axis X. The reinforcement gasket 63 is arranged at the through opening 52. Furthermore, the reinforcement gasket 63 comprises an appendage 64, which in use extends in the compartment V into the space between the central segment 43 of the shaft 39 and the magnet 61.

In use, the electric motor 55, controlled by the electronic control unit 22, rotates the toothed element 59, which is integral with the shaft 39, by means of the gear transmission. By rotating the shaft 39 about the symmetry axis X, the motion is transmitted to the using device through the interface lever 54 or directly through the geometry of the shaft 39, which controls the using device. It should be noted that the shaft 39 (in the case of an electromechanical actuator 17 free of the interface lever 54) or the assembly formed by the upper segment 44 of the shaft 39 and by the interface lever 54 integral with said upper segment 44 (in the case of an electromechanical actuator 17 provided with an interface lever 54) can only be led through the lid 31. In other words, the section of the shaft 39 or the assembly formed by the upper segment 44 of the shaft 39 and by the interface lever 54 integral with said upper segment 44 is arranged on one side of the housing 29 opposite to the one of the electric motor 44.

The electromechanical actuator 17 herein described has several advantages. Specifically, it is simple and inexpensive to manufacture, has a compact size and its various components are characterized by a high mechanical and thermal resistance to stress.

## Claims

1. An electromechanical actuator (17) to operate a using device of an internal combustion engine (1), in particular for a turbocharger adjusting system (12); wherein the electromechanical actuator (17) comprises:
a housing (29) formed through a lower element (30) and holding a closed seat (35), which is provided with a symmetry axis (X) and with a lid (31), which is in turn provided with a through opening (52) coaxial to the symmetry axis (X);
a shaft (39), which is coaxial to the symmetry axis (X) and comprises a lower portion (40) that engages the seat (35) and an upper portion (41) whose diameter is uneven and smaller than the diameter of the lower portion (40); the upper portion (41) is divided into a segment (42) joining it to the lower portion (40), a central segment (43) and an upper segment (44) projecting from the opening (52) to operate the using device;
an electric motor (55), which, through a transmission, causes the rotation of the shaft (39) and is housed in a seat formed in the lower element; and
a tubular bushing (49), coaxial to the symmetry axis (X) and interposed between the lower portion (40) and the seat (35);
the actuator (17) **being characterized in that** the lower portion (40) is provided with a peripheral annular groove (46), which is designed to house an annular sealing gasket (47) interposed between the lower portion (40) and the seat (35), wherein an upper surface (48) of the annular sealing gasket (47) defines a support surface for the bushing (49), and **in that** an upper surface (50) of the bushing (49) is coplanar with an upper surface (51) of the seat (35), thus defining a striker for a first element (59) of the transmission; and **in that** the actuator further comprises an annular reinforcement gasket (63), which is co-moulded in the lid (31), has an annular shape and is coaxial to the symmetry axis (X); wherein the annular reinforcement gasket (63) comprises an appendage (64), which projects into a compartment (V) defined between the lower element (30) and the lid (31), thus getting into a space available between the central segment (43) of the shaft (39) and a portion (61) made of magnetic material of the first element (59).

2. An electromechanical actuator according to claim 1, wherein the first element (59) is coaxially fitted to the shaft (39); and wherein the electromechanical actuator (17) comprises a sensor (62), which is integral to the lid (31) and is arranged in a position facing and near the magnetic portion (61) to detect the movement of the first element (59) relative to the lid (31).

3. An electromechanical actuator according to claim 1, wherein the first element (59) is coaxially fitted to the shaft (39); and wherein the electromechanical actuator (17) comprises a sensor (62), which is integral to the lower element (30) and is arranged in a position facing and near the magnetic portion (61) to detect the movement of the first element (59) relative to the lid (31).

4. An electromechanical actuator according to any one of the preceding claims, wherein the first element (59) is a toothed element (59), which can rotate around the symmetry axis (X) and comprises a half-toroidal magnetic portion (61), which is coaxial to the symmetry axis (X) and is movable between two extreme limit-stop positions.

5. An electromechanical actuator according to any of the claims from 2 to 4, wherein the magnetic portion (61) is made of plastic neodymium.

6. An electromechanical actuator according to any one of the previous claims, wherein the seat (35) is cup-shaped and is defined by a bottom wall (36), which projects from a base wall (37) of the lower element (30) out of the housing (29), and by a cylindrical side wall (38), which is divided into a section (38*) joining it to the base wall (37) and into a section (38**) projecting into a compartment (V) defined between the lower element (30) and the lid (31).

7. An electromechanical actuator according to any one of the preceding claims, wherein three shoulders (45) are provided at three section variation points along the symmetry axis (X) of the upper portion (41).

8. An electromechanical actuator according to any one of the previous claims and provided with an interface lever (54) to operate the using device, which is connected to the upper segment (44) of the shaft (39) by which it is operated.

9. An electromechanical actuator according to any of the previous claims, wherein the shaft (39) is made of metal, preferably steel.

10. An electromechanical actuator according to any one of the previous claims, wherein the lower element (30) of the housing (29) is made of aluminium and the lid (31) is made of plastic material.

## Patentansprüche

1. Elektromechanischer Aktor (17), um eine Verwendungseinrichtung einer Brennkraftmaschine (1), insbesondere für ein Turboladereinstellsystem (12), zu betätigen; wobei der elektromechanische Aktor (17) Folgendes umfasst:
ein Gehäuse (29), das mittels eines Unterteils (30) gebildet ist und eine geschlossene Aufnahme (35) enthält, die mit einer Symmetrieachse (X) und mit einem Deckel (31) versehen ist, der wiederum mit einer mit der Symmetrieachse (X) koaxialen Durchgangsöffnung (52) versehen ist;
eine Welle (39), die mit der Symmetrieachse (X) koaxial ist und einen unteren Teil (40), der mit der Aufnahme (35) in Eingriff ist, und einen oberen Teil (41), dessen Durchmesser uneben und kleiner als der Durchmesser des unteren Teils (40) ist, umfasst; wobei der obere Teil (41) in ein Segment (42), das ihn mit dem unteren Teil (40) verbindet, ein mittleres Segment (43) und ein oberes Segment (44), das aus der Öffnung (52) vorsteht, um die Verwendungseinrichtung zu betätigen, unterteilt ist;
einen Elektromotor (55), der über ein Getriebe die Drehung der Welle (39) bewirkt und in einer Aufnahme, die im unteren Element gebildet ist, aufgenommen ist; und
eine rohrförmige Buchse (49), die mit der Symmetrieachse (X) koaxial ist und zwischen dem unteren Teil (40) und der Aufnahme (35) angeordnet ist; wobei der Aktor (17) **dadurch gekennzeichnet ist,**
**dass** der Unterteil (40) mit einer ringförmigen Umfangsnut (46) versehen ist, die ausgelegt ist, eine ringförmige Dichtung (47), die zwischen dem unteren Teil (40) und der Aufnahme (35) angeordnet ist, aufzunehmen, wobei eine Oberseite (48) der ringförmigen Dichtung (47) eine Stützfläche für die Buchse (49) definiert, dadurch, dass eine Oberseite (50) der Buchse (49) komplanar mit einer Oberseite (51) der Aufnahme (35) ist, wodurch ein Schlagbolzen für ein erstes Element (59) der Übertragung definiert wird; und dadurch, dass der Aktor ferner eine ringförmige Verstärkungsdichtung (63) umfasst, die in den Deckel (31) eingegossen ist, eine ringförmige Form besitzt und mit der Symmetrieachse (X) koaxial ist;
wobei die ringförmige Verstärkungsdichtung (63) ein Anhängsel (64) umfasst, das in eine Kammer (V), die zwischen dem Unterteil (30) und dem Deckel (31) definiert ist, vorsteht, wodurch es in einen Raum gelangt, der zwischen dem mittleren Segment (43) der Welle (39) und einem Abschnitt (61), der aus einem magnetischen Material des ersten Elements (59) gebildet ist, verfügbar ist.

2. Elektromechanischer Aktor nach Anspruch 1, wobei das erste Element (59) an der Welle (39) koaxial angebracht ist; und der elektromechanische Aktor (17) einen Sensor (62) umfasst, der fest in den Deckel (31) eingebaut ist und in einer Position angeordnet ist, die dem magnetischen Abschnitt (61) zugewandt und nahe ist, um die Bewegung des ersten Elements (59) in Bezug auf den Deckel (31) zu detektieren.

3. Elektromechanischer Aktor nach Anspruch 1, wobei das erste Element (59) koaxial an der Welle (39) angebracht ist; und der elektromechanische Aktor (17) einen Sensor (62) umfasst, der einteilig mit dem Unterteil (30) ist und in einer Position angeordnet ist, die dem magnetischen Abschnitt (61) zugewandt und nahe ist, um die Bewegung des ersten Elements (59) in Bezug auf den Deckel (31) zu detektieren.

4. Elektromechanischer Aktor nach einem der vorhergehenden Ansprüche, wobei das erste Element (59) ein Zahnelement (59) ist, das sich um die Symmetrieachse (X) drehen kann und einen halbringförmigen magnetischen Abschnitt (61), umfasst, der mit der Symmetrieachse (X) koaxial ist und zwischen zwei extremen Anschlagpositionen beweglich ist.

5. Elektromechanischer Aktor nach einem der Ansprüche 2 bis 4, wobei der magnetische Abschnitt (61) aus Kunststoff-Neodym hergestellt ist.

6. Elektromechanischer Aktor nach einem der vorhergehenden Ansprüche, wobei die Aufnahme (35) becherförmig ist und durch eine Bodenwand (36), die von einer Basiswand (37) des Unterteils (30) aus dem Gehäuse (29) vorsteht, und eine zylindrische Seitenwand (38), die in einen Abschnitt (38*), der es mit der Basiswand (37) verbindet, und in einen Abschnitt (38**), der in eine Kammer (V) vorsteht, die zwischen dem Unterteil (30) und dem Deckel (31) definiert ist, unterteilt ist, definiert ist.

7. Elektromechanischer Aktor nach einem der vorhergehenden Ansprüche, wobei drei Absätze (45) bei drei Abschnittsvariationspunkten entlang der Symmetrieachse (X) des oberen Teils (41) vorgesehen sind.

8. Elektromechanischer Aktor nach einem der vorhergehenden Ansprüche, der mit einem Schnittstellenhebel (54) versehen ist, um die Verwendungseinrichtung zu betätigen, der mit dem oberen Segment (44) der Welle (39) verbunden ist, durch das er betätigt wird.

9. Elektromechanischer Aktor nach einem der vorhergehenden Ansprüche, wobei die Welle (39) aus Metall, bevorzugt Stahl, hergestellt ist.

10. Elektromechanischer Aktor nach einem der vorhergehenden Ansprüche, wobei der Unterteil (30) des Gehäuses (29) aus Aluminium hergestellt ist und der Deckel (31) aus einem Plastikmaterial hergestellt ist.

## Revendications

1. Actionneur électromécanique (17) pour faire fonctionner un dispositif d'utilisation d'un moteur à combustion interne (1), en particulier pour un système de réglage de turbocompresseur (12) ; dans lequel l'actionneur électromécanique (17) comprend :
un carter (29) qui est formé au travers d'un élément inférieur (30) et qui contient un siège fermé (35), lequel carter est muni d'un axe de symétrie (X) et d'un couvercle (31), lequel couvercle est à son tour muni d'une ouverture traversante (52) qui est coaxiale par rapport à l'axe de symétrie (X) ;
un arbre (39), qui est coaxial par rapport à l'axe de symétrie (X) et qui comprend une partie inférieure (40) qui engage le siège (35) et une partie supérieure (41) dont un diamètre est non régulier et est plus petit que le diamètre de la partie inférieure (40) ; la partie supérieure (41) est divisée selon un segment (42) qui la joint à la partie inférieure (40), un segment central (43) et un segment supérieur (44) qui fait saillie depuis l'ouverture (52) pour faire fonctionner le dispositif d'utilisation ;
un moteur électrique (55) qui, par l'intermédiaire d'une transmission, provoque la rotation de l'arbre (39) et est logé dans un siège qui est formé dans l'élément inférieur ; et
une douille tubulaire (49), qui est coaxiale par rapport à l'axe de symétrie (X) et qui est interposée entre la partie inférieure (40) et le siège (35) ;
l'actionneur (17) étant **caractérisé en ce que** la partie inférieure (40) est munie d'une gorge annulaire périphérique (46), laquelle gorge est conçue de manière à ce qu'elle loge un joint d'étanchéité annulaire (47) qui est interposé entre la partie inférieure (40) et le siège (35), dans lequel une surface supérieure (48) du joint d'étanchéité annulaire (47) définit une surface de support pour la douille (49), et **en ce qu'**une surface supérieure (50) de la douille (49) est coplanaire par rapport à une surface supérieure (51) du siège (35), d'où ainsi la définition d'un percuteur pour un premier élément (59) de la transmission ; et **en ce que** l'actionneur comprend en outre un joint de renforcement annulaire (63), qui est co-moulé dans le couvercle (31), qui présente une forme annulaire et qui est coaxial par rapport à l'axe de symétrie (X) ; dans lequel le joint de renforcement annulaire (63) comprend un appendice (64), lequel fait saillie à l'intérieur d'un compartiment (V) qui est défini entre l'élément inférieur (30) et le couvercle (31), d'où ainsi son positionnement à l'intérieur d'un espace qui est disponible entre le segment central (43) de l'arbre (39) et une partie (61) qui est réalisée en un matériau magnétique du premier élément (59).

2. Actionneur électromécanique selon la revendication 1, dans lequel le premier élément (59) est ajusté de façon coaxiale sur l'arbre (39) ; et dans lequel l'actionneur électromécanique (17) comprend un capteur (62), lequel capteur est d'un seul tenant avec le couvercle (31) et est agencé au niveau d'une position au niveau de laquelle il fait face à la partie magnétique (61) et il est proche de cette même partie magnétique de manière à ce qu'il détecte le déplacement du premier élément (59) par rapport au couvercle (31).

3. Actionneur électromécanique selon la revendication 1, dans lequel le premier élément (59) est ajusté de façon coaxiale sur l'arbre (39) ; et dans lequel l'actionneur électromécanique (17) comprend un capteur (62), lequel capteur est d'un seul tenant avec l'élément inférieur (30) et est agencé au niveau d'une position au niveau de laquelle il fait face à la partie magnétique (61) et il est proche de cette même partie magnétique de manière à ce qu'il détecte le déplacement du premier élément (59) par rapport au couvercle (31).

4. Actionneur électromécanique selon l'une quelconque des revendications précédentes, dans lequel le premier élément (59) est un élément à dent(s) (59), lequel peut être entraîné en rotation autour de l'axe de symétrie (X) et comprend une partie magnétique semi-toroïdale (61), laquelle partie magnétique est coaxiale par rapport à l'axe de symétrie (X) et peut être déplacée entre deux positions de limite-butée extrêmes.

5. Actionneur électromécanique selon l'une quelconque des revendications 2 à 4, dans lequel la partie magnétique (61) est réalisée en néodyme plastique.

6. Actionneur électromécanique selon l'une quelconque des revendications précédentes, dans lequel le siège (35) est en forme de coupelle et il est défini par une paroi de fond (36), laquelle paroi de fond fait saillie depuis une paroi de base (37) de l'élément inférieur (30) en dehors du carter (29), et par une paroi latérale cylindrique (38), laquelle paroi latérale est divisée selon une section (38*) qui la joint à la paroi de base (37) et selon une section (38**) qui fait saillie à l'intérieur d'un compartiment (V) qui est défini entre l'élément inférieur (30) et le couvercle (31).

7. Actionneur électromécanique selon l'une quelconque des revendications précédentes, dans lequel trois épaulements (45) sont prévus au niveau de trois points de variation de section suivant l'axe de symétrie (X) de la partie supérieure (41).

8. Actionneur électromécanique selon l'une quelconque des revendications précédentes et muni d'un levier d'interface (54) pour faire fonctionner le dispositif d'utilisation, lequel levier est connecté au segment supérieur (44) de l'arbre (39) au moyen duquel il est actionné.

9. Actionneur électromécanique selon l'une quelconque des revendications précédentes, dans lequel l'arbre (39) est réalisé en un métal, de préférence en acier.

10. Actionneur électromécanique selon l'une quelconque des revendications précédentes, dans lequel l'élément inférieur (30) du carter (29) est réalisé en aluminium et le couvercle (31) est réalisé en une matière plastique.
